# EUROPÄISCHE PATENTSCHRIFT

(11) **EP 1 308 081 B1**
(45) Veröffentlichungstag und Bekanntmachung des Hinweises auf die Patenterteilung: **14.05.2003**
(21) Anmeldenummer: 01126651.7
(22) Anmeldetag: 08.11.2001
(51) Int. Cl.: A01G 3/08

(54) **Vorrichtung zum Formschneiden von Pflanzen**
Device for shape cutting of plants
Dispositif pour couper des plantes en forme

(43) Veröffentlichungstag der Anmeldung: 07.05.2003
(73) Patentinhaber: Weisser, Helmut O., 72793 Pfullingen (DE)
(72) Erfinder: Weisser, Helmut O., 72793 Pfullingen (DE)

(56) Entgegenhaltungen:
- US-A- 2 679 691
- US-A- 3 487 614
- US-A- 4 044 472

## Beschreibung

Die Erfindung betrifft eine Vorrichtung mit der es möglich ist, einfach und schnell, auch ohne geometrische Gestaltungsfähigkeiten, Pflanzen in eine beabsichtigte, vorzugsweise kugelige Form zu bringen.

Um sich mit einem gewissen mediterranen Lebensgefühl zu umgeben, werden immer mehr Pflanzen nach z. B. toskanischer Art, d. h. nach strengen geometrischen Formen, getrimmt und im Handel angeboten.

Solange diese Pflanzen beim Gärtner stehen sind sie in der Regel fachmännisch geschnitten. Nach Kauf und entsprechender häuslicher Pflege tritt dann irgendwann der Zeitpunkt ein, die Pflanze wieder in die ursprüngliche Fasson bringen zu müssen. Dies ist dann mehr oder weniger dem Talent des Besitzers überlassen. Spätestens dann treten bei vielen Liebhabern dieser Pflanzen Probleme auf die oft nur sehr mühsam bzw. unzureichend beseitigt werden können.

In US 2 679 691 A wird eine Vorrichtung beschrieben, die einen ähnlichen Ansatz verfolgt, allerdings mit wesentlichen Merkmalsunterschieden. So wird ein Halte- bzw. Fixierstab ins Zentrum der Pflanze gesteckt, der unterschiedliche Schablonen, teils drehbar, aufnehmen kann. Bei Gewächsen die einen Stamm ausgebildet haben, ist diese Methode nicht anwendbar. Außerdem kann durch Einstecken eines Stabes ins Herz der Pflanze diese nachhaltig geschädigt werden. Bei erforderlichen Nachschnitten, muss immer wieder die gleiche Verankerungsstelle für die Stabaufnahme getroffen werden, um eine Kontinuität der äußeren Form zu gewährleisten. Dies ist in der Praxis nicht einfach durchzuführen, zumal der Wurzelbereich dadurch immer wieder geschädigt wird.

US 4 044 472 beschreibt ein Gerät das einen individuellen Formschnitt ermöglichen soll.

Dabei wird ein in Dimension und Form verstellbarer Schablonendraht, der an einem Stab dem Zentrum der Pflanze zugeordnet ist, positioniert. Durch Verdrehen des Stabes kann die Oberfläche der Pflanze abgefahren werden. Die Schwierigkeiten und Ungenauigkeiten ergeben sich aus der dezentrischen Lage des Aufnahmestabes, der nicht mittig positioniert werden kann. Desweiteren kann durch die nach unten austretende Befestigung des Schablonendrahtes kein exakter Halbkreis eingestellt werden. Dies ist jedoch für einen akkuraten Kugelschnitt notwendig. Bei dieser Vorrichtung ist zwar eine Stammbefestigung vorgesehen, die die vorgenannten Probleme ebenso übernimmt und nicht lösen kann.

In US 3 487 614 werden mehrere Schneide- und Trimmsysteme beschrieben, die vorliegende Entwicklung in einigen Bereichen tangieren, sich aber auf Grund eines professionellen Hintergrunds erheblich unterscheiden. Die einzelnen Geräte sind so ausgelegt und dimensioniert, dass ausschließlich ein kommerzieller Einsatz vorgesehen ist. Eine Tauglichkeit für den einfachen privaten Gebrauch ist mit diesen mechanisch aufwendigen und teuren Gerätschaften wohl auch nicht beabsichtigt. Vielmehr geht es dabei um die professionelle Bearbeitung durch entsprechende Firmen die sich solche Apparaturen anschaffen können. Alleine der Aufbau und die Bedienung der unterschiedlichen Systeme erfordert ausgebildetes Fachpersonal.

Außerdem, sind Gerät bekannt um Großgehölze zu schneiden, wie die in DE 2805353 C2 beschriebene Baumschneidevorrichtung. Auch das Freischneidegerät DE 69329113 T2 entspricht nicht den Anforderungen der Problembeseitigung.

Deshalb hat sich die Erfindung zum Ziel gesetzt, eine einfache und universelle Vorrichtung zu schaffen, die es auch ungeübten Personen erlaubt, vorzugsweise kugelige Gewächse, nach deren Austrieb, wieder in die gewünschte Form zu bringen.

Die Erfindung wird anhand nachstehender Beschreibung und Zeichnungen erläutert.

Es zeigen:
- Fig. 1: Kugelschneideschablone mit Lager- und Haltevorrichtung zur Baumstammbefestigung
- Fig. 2: Schneidering mit integriertem Trennmesser (Teilansicht)
- Fig. 3: Kugelschneideschablone mit Lager- und Haltevorrichtung zur Baumstammbefestigung an einem Hochgewächs
- Fig. 4: Kugelschneideschablone mit Lager- und Haltevorrichtung für stammlose Gewächse

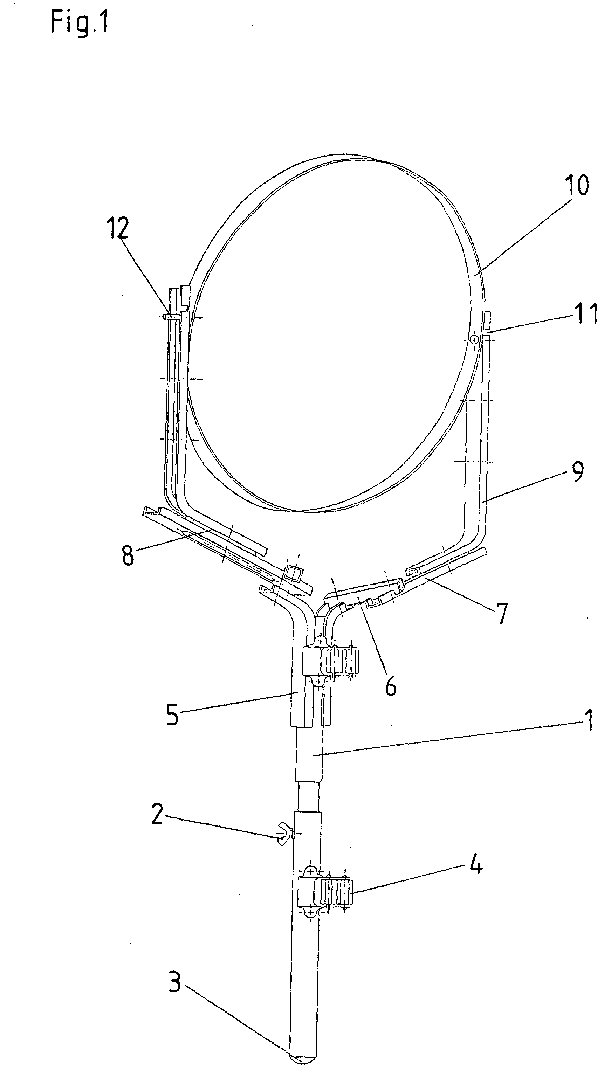

Die in Fig. 1 dargestellte Vorrichtung kann sowohl für eine unterschiedliche Stammhöhe wie auch für verschiedene Kugeldurchmesser eingesetzt werden. Dazu wird zunächst der obere Teil des Standrohres (1) auf die erforderliche Länge ausgezogen und mit einer Flügelschraube (2) arretiert. Mit der Halbrundkappe (3) wird die Vorrichtung auf den Erdboden gestellt und mit den beiden durchmesservariablen Gummiwalzenhaltern (4) am Baumstamm befestigt. Die um 180° versetzten und schräg nach oben weisenden Grundarme (5) nehmen je ein schräg ausgestelltes Vierkantrohr (6) auf, um den Versatz von Vorrichtung zum Pflanzenmittelpunkt zu kompensieren. Am Ende jedes Vierkantrohrs ist eine nach oben offene U-Schiene (7) befestigt, die wiederum eine gegensätzliche Winkel- U-Schiene (9) aufnimmt, die in ihrer Position auf der Träger- U-Schiene (7) mittels eines Distanz- und Gleitstücks (8) verschoben werden kann. Dadurch können im Durchmesser verschiedene Kreisschablonen (10) eingesetzt werden. Dies erfordert auch eine veränderbare Positionierung in der Winkel- U-Schiene (9). Dazu sind im vertikalen Teil mehrere abwärtsweisende Aussparungen (11) vorhanden, in die die beiden gegenüberliegenden, an der Schablone befestigten Bolzen (12), eingehängt werden.

Mit der Kreisschablone (10) kann nahezu eine 360° Schwenkung durchgeführt werden (lediglich der Stammdurchmesser ist in Abzug zu bringen). Um die Austriebe außerhalb des Ringes zu entfernen genügt die einfache Handhabung mit einer Gartenschere oder einer Akku betriebenen Rasenschere, die entlang der Schablone geführt wird. Durch axiales Verdrehen der gesamten Vorrichtung von ca. 90° können die beiden Aufhängebereiche des Schablonenrings ebenfalls beschnitten werden.

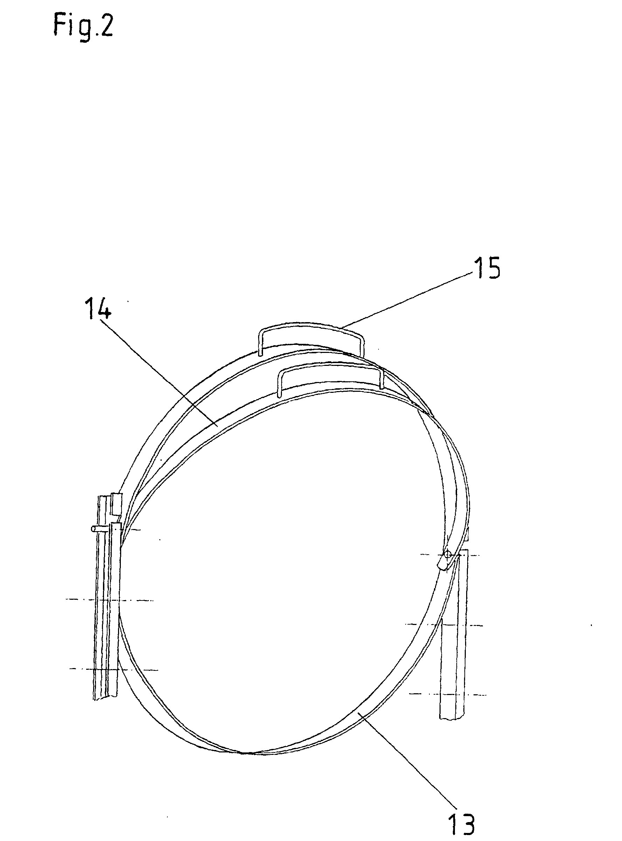

Statt einer Kreisschablone, kann ein aus Bandstahl hergestelltes Ringmesser (13) in die Vorrichtung eingesetzt werden (Fig. 2). Um den Schneideeffekt herbeizuführen ist ein Gegenmesser (14) in Halbkreisausbildung passgenau mit der Aufhängung verbunden. Die beiden Haltegriffe (15) werden mit jeder Hand gehalten und beim Schnitt gegeneinander geführt. Eine Unfallgefahr wird durch die beidhändige Betätigung vermieden. Durch vollständiges Schwenken in der Lagerung wird nahezu die gesamte Oberfläche beschnitten. Hier gilt ebenfalls, dass ein axiales Versetzen um 90° den Kugelschnitt perfektioniert.

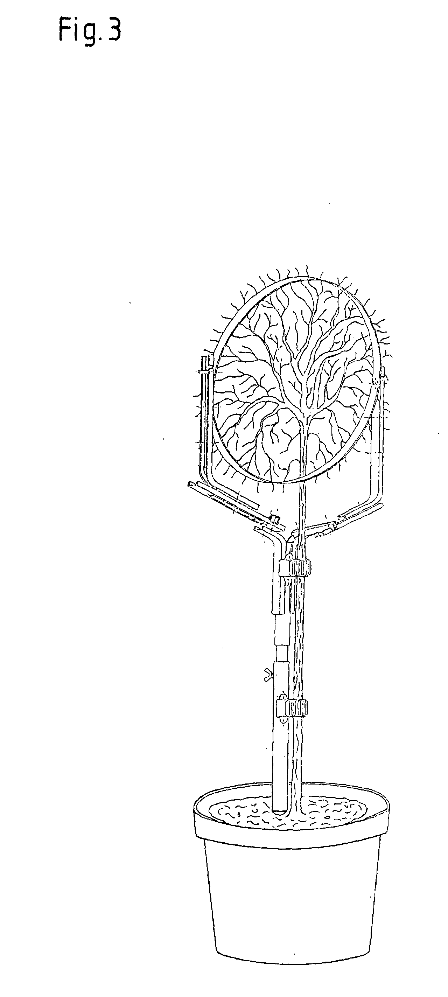

Fig. 3 zeigt die eingesetzte Vorrichtung mit einem eingepflanzten Kugelbäumchen in einem Topf vor dem Schnitt. Pflanzen mit einem Stamm, die direkt im Erdreich stehen, können auf die selbe Art und Weise entweder mit der Kreisschablone oder dem Ringmesser beschnitten werden.

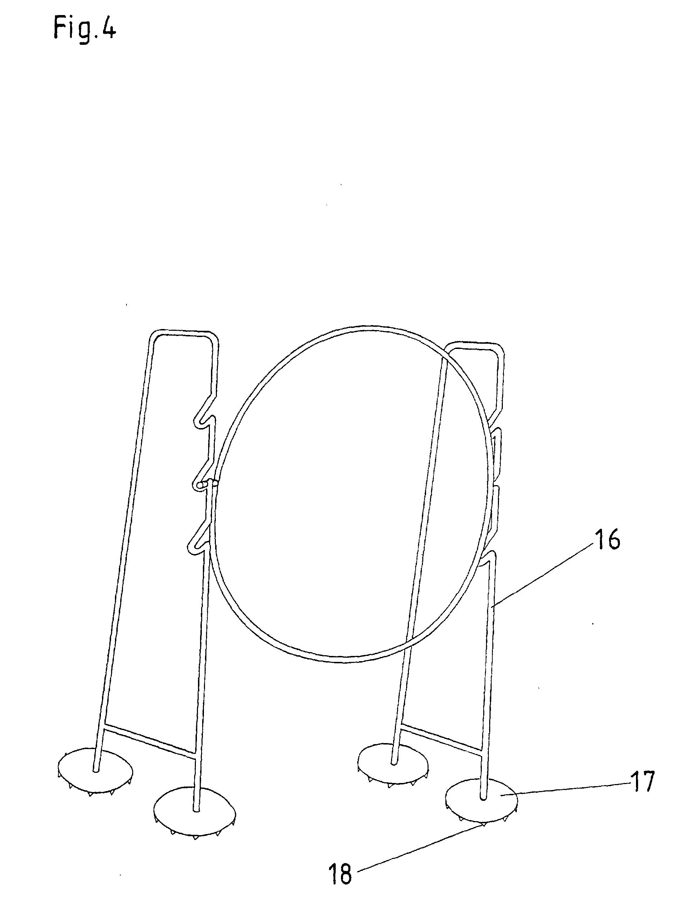

Dasselbe Problem des Formschnitts tritt auch bei stammlosen Gewächsen auf Dabei ist die Lösung wesentlich einfacher zu realisieren. Fig. 4 zeigt die Schneideschablone, die in einem zweiteiligen Haltegestell (16) gelagert ist. Durch stufig eingelassene Aufnahmen, für die beiden Lagerstifte, kann der Durchmesser der Kreisschablone bzw. des Schneiderings an die Kugelgröße der Pflanze angepasst werden. Am Ende jeden Gestellteils befinden sich zwei Standteller (17) an deren Ränder Dreieckskrallen (18) für eine unverrückbare Positionierung sorgen. Dabei ist es egal ob das Gestell direkt auf der Erdoberfläche oder auf dem Erdboden eines Gefäßes steht.

## Patentansprüche

1. Vorrichtung zum Formschneiden von Pflanzen, insbesondere in die Gestalt einer geometrischen Kugel, **dadurch gekennzeichnet, dass** mittels durchmesservariablen, über ihre horizontale Mittelachse nahezu 360° schwenkbaren Kreisschablone (10) bzw. Schneideringe (13), die in einer veränderbar dimensionierten Halterung gelagert sind, eine Bearbeitung der gesamten Oberfläche einer Pflanze, in einer Einstellung, zulässt.

2. Vorrichtung zum Formschneiden von Pflanzen, gemäß Anspruch 1, **dadurch gekennzeichnet, dass** durch den Gebrauch einer Gartenschere bzw. Akku-Rasenschere, die entlang der Kreisschablone geführt wird, die Austriebe der Pflanze beschnitten werden können.

3. Vorrichtung zum Formschneiden von Pflanzen, gemäß Anspruch 1, **dadurch gekennzeichnet, dass** ein Schneidering (13) mit einem Halbring als Gegenmesser (14), in die Vorrichtung eingesetzt wird, der die Funktion des Formschnitts ohne weitere Hilfsmittel übernimmt.

4. Vorrichtung zum Formschneiden von Pflanzen, gemäß Anspruch 1-3, **dadurch gekennzeichnet, dass** ein längenveränderbares Standrohr (1), das mit durchmesservariablen Stammbefestigungen versehen ist, an die Stammhöhe der Pflanze angepasst werden kann.

5. Vorrichtung zum Formschneiden von Pflanzen, gemäß Anspruch 1-4, **dadurch gekennzeichnet, dass** durch Versetzen des horizontalen und vertikalen Aufnahmelagers, nach außerhalb der Standrohr-Achse, die eingesetzten Kreisschablonen (10) bzw. Schneideringe (13), den Pflanzenmittelpunkt exakt erreichen.

6. Vorrichtung zum Formschneiden von Pflanzen, gemäß Anspruch 1-3, **dadurch gekennzeichnet, dass** statt des längenveränderbaren Standrohrs, eine Halte- und Lagervorrichtung (16) eingesetzt wird, die eine beidseitige Bodenabstützung zulässt.

7. Vorrichtung zum Formschneiden von Pflanzen, gemäß Anspruch 1-6, **dadurch gekennzeichnet, dass** Pflanzen mit und ohne Stamm bearbeitet werden können.

8. Vorrichtung zum Formschneiden von Pflanzen, gemäß Anspruch 1-7, **dadurch gekennzeichnet, dass** Pflanzen inner- und außerhalb von Gefäßen beschnitten werden können.

9. Vorrichtung zum Formschneiden von Pflanzen, gemäß Anspruch 1-8, **dadurch gekennzeichnet, dass** leblose, so genannte Deko-Pflanzen, bei ihrer Herstellung beschnitten werden können.

10. Vorrichtung zum Formschneiden von Pflanzen, gemäß Anspruch 1-9, **dadurch gekennzeichnet, dass** durch eine geometrische Veränderung der Schablone bzw. der Schneideeinrichtung auch andere Formen, nach dem gleichen Prinzip, erzeugt werden können.

## Claims

1. A device for form-cutting plants, especially in the shape of a geometric globe. **Characterized by** the fact that the entire surface of a plant can be processed with one setting by means of variable-diameter circular templates (10) or cutting rings (13) which are mounted in a variably dimensionable bracket and can be rotated nearly 360° around their horizontal central axis.

2. A device for form-cutting plants according to Claim No. 1; **characterized by** the fact that plant shoots can be cut with garden shears or battery-powered lawn shears guided along the circular template.

3. A device for form-cutting plants according to Claim No. 1; **characterized by** the fact that a cutting ring (13) with a half-ring as counter-blade (14) is inserted into the device and takes over the function of form-cutting without further accessories.

4. A device for form-cutting plants according to Claims Nos. 1-3; **characterized by** the fact that a lengthwise adjustable vertical tube (1) which is equipped with variable-diameter stem attachments can be adapted to the stem height of the plant.

5. A device for form-cutting plants according to Claims Nos. 1-4, **characterized by** the fact that by shifting the horizontal and vertical holder mounting to the outside of the vertical tube axis the circular templates (10) which are used and/or the cutting rings (13) precisely reach the midpoint of the plant.

6. A device for form-cutting plants according to Claims No. 1-3, **characterized by** the fact that instead of the lengthwise adjustable vertical tube a holding and mounting device (16) is used which permits support at the bottom from both sides.

7. A device for form-cutting plants according to Claims No. 1-6, **characterized by** the fact that plants with and without stems can be worked on.

8. A device for form-cutting plants according to Claims 1-7, **characterized by** the fact that plants both in and outside of containers can be cut.

9. A device for form-cutting plants according to Claims 1-8, **characterized by** the fact that non-living, so-called "Deco-Plants", can be cut during their production.

10. A device for form-cutting plants according to Claims 1-9, **characterized by** the fact that by means of geometric variation of the template and/or the cutting equipment other forms can be created according to the same principle.

## Revendications

1. Dispositif pour couper en forme des plantes, surtout en forme de sphère géométrique, **caractérisé par** la possibilité de traiter la surface totale d'une plante dans un réglage au moyen de gabarits circulaires (10) de diamètres variables pivotables sur leur axe central horizontal à presque 360°, ou au moyen d'anneaux tranchants (13) articulés dans un support à dimension variable.

2. Dispositif pour couper en forme des plantes, selon revendication 1, **caracterisé par** la possibilité de couper les bourgeons de la plante en utilisant un sécateur ou un coupe-herbe à accumulateur, qui est guidé le long du gabarit circulaire.

3. Dispositif pour couper en forme des plantes, selon revendication 1, **caractérisé par** la mise d'un anneau tranchant (13) avec demi-anneau comme contre-couteau (14) dans le dispositif, ce qui permet la taille en forme sans aucun instrument auxiliaire.

4. Dispositif pour couper en forme des plantes, selon revendications 1-3, **caractérisé par** la possibilité d'adapter à la hauteur du tronc de la plante un tube extensible (1) pourvu de fixations au tronc de diamètres variables.

5. Dispositif pour couper en forme des plantes, selon revendications 1-4, **caractérisé par** le réglage exact des gabarits circulaires (10) ou anneaux tranchants (13) au centre de la plante en décalant les supports de fixations horizontaux et verticaux en dehors de l'axe du tube.

6. Dispositif pour couper en forme des plantes, selon revendications 1-3, **caracterisé par** la mise d'un dispositif de support et de retenue (16) au lieu du tube extensible, ce qui permet d'obtenir un soutien des deux côtés au sol.

7. Dispositif pour couper en forme des plantes, selon revendications 1-6, **caracterisé par** la possibilité de tailler des plantes avec ou sans tronc.

8. Dispositif pour couper en forme des plantes, selon revendications 1-7, **caractérisé par** la possibilité de couper les plantes tant en conteneur comme en dehors.

9. Dispositif pour couper en forme des plantes, selon revendications 1-8, **caractérisé par** la possibilité de couper des plantes artificielles de décoration après leur fabrication.

10. Dispositif pour couper en forme des plantes, selon revendications 1-9, **caractérisé par** la possibilité de produire d'autres formes d'après le même principe par la modification géométrique du gabarit ou du dispositif de taille.
